# EUROPÄISCHE PATENTSCHRIFT

(11) **EP 1 155 501 B1**
(45) Veröffentlichungstag und Bekanntmachung des Hinweises auf die Patenterteilung: **04.09.2002**
(21) Anmeldenummer: 99913101.4
(22) Anmeldetag: 03.03.1999
(51) Int. Cl.: H04B 1/12

(54) **FREQUENZMULTIPLEX-TRANSMITTER UND VERFAHREN ZUR AUSLÖSCHUNG VON ÜBERSPRECHEN**
FREQUENCY MULTIPLEX TRANSMITTER AND METHOD FOR ELIMINATING CROSSTALK
EMETTEUR A MULTIPLEXAGE EN FREQUENCE ET PROCEDE POUR SUPPRIMER LA DIAPHONIE

(43) Veröffentlichungstag der Anmeldung: 21.11.2001
(73) Patentinhaber: SIEMENS AKTIENGESELLSCHAFT, 80333 München (DE)
(72) Erfinder: OSTERTAG, Thomas, D-85464 Finsing (DE); TUO, Xihe, D-47057 Duisburg (DE)
(86) Internationale Anmeldenummer: DE9900562
(87) Internationale Veröffentlichungsnummer: WO00052838

(56) Entgegenhaltungen:
- WO-A-96/15596
- US-A- 5 444 864
- US-A- 5 574 978
- US-A- 5 691 978

## Beschreibung

Die vorliegende Erfindung bezieht sich auf einen Frequenzmultiplex-Transceiver sowie auf ein Verfahren zur Auslöschung von Übersprechen in einem Frequenzmultiplex-Transceiver gemäß dem Oberbegriff des Anspruchs 1 bzw. 9.

Bei der Konstruktion von Mobilfunkgeräten müssen Maßnahmen ergriffen werden, um die HF-Stufe vor einer Überlast durch starke Interferenzsignale oder andere unerwünschte Signale zu schützen. Eine potentielle Quelle für Interferenzsignale ist Übersprechen, das durch den Sendezweig eines Transceivers erzeugt wird, wenn dieser in dem sogenannten Vollduplex-Frequenzmultiplexmodus betrieben wird. Wenn in diesem Betriebsmodus das Übersprechen, das durch den Sendezweig erzeugt wird, sehr stark ist, kann der Empfangszweig des Transceivers insbesondere bei verhältnismäßig schwachen empfangenen Signalpegeln nicht zufriedenstellend arbeiten.

Andererseits wird in einem sogenannten Software-definierten Mobilfunkgerät oder einem ähnlichen Telekommunikationsgerät durch die HF-Stufe ein Frequenzspektrum abgedeckt, das sehr breit ist (beispielsweise in einem Bereich von einigen hundert Megaherz bis in den Gigaherzbereich). Der Grund dafür liegt darin, dass ein Mobilfunkgerät in der Zukunft in der Lage sein soll, ggf. auch mehrere Standards (GSM, DECT, UMTS, etc.) abzudecken.

Darüber hinaus ermöglicht ein Software-definiertes Mobilfunkgerät eine variable und flexible Einstellung des Duplexabstands. Daher ist in diesem Fall das Übersprechen von dem Sendezweig ein besonders kritischer Punkt, der in den Griff gebracht werden muss.

Theoretisch können hinsichtlich einer solchen Auslöschung des Übersprechens, das durch den Sendezweig erzeugt wird, filterähnliche Duplexer, Bandpaßfilter oder Bandsperrfilter verwendet werden, um das Übersprechen in dem Empfangszweig zu verringern. Diese Konzepte können selbstverständlich auch in Software-definierten Telekommunikations-Funkgeräten verwendet werden. Indessen ist bei den genannten Techniken das Frequenzband und der Duplexabstand fest vorgegeben. Dies ist dagegen allgemein bei Software-definierten Geräten nicht der Fall. Dies bedeutet, dass beispielsweise die Filter oder die Duplexer abstimmbar ausgeführt sein müssen, um auch bei veränderbaren Frequenzbändern oder Duplex-Abständen verwendet werden zu können. Derartige abstimmbare Filter, Duplexer, oder dergleichen sind indessen schwierig zu implementieren und zur Zeit aufgrund der Anforderungen an die Größe, das Gewicht, den Energieverbrauch und die Linearität für Mobilfunkgeräte oder ähnliche Produkte nicht verfügbar.

Zusammengefasst gibt es also zwei grundsätzliche Probleme, die eine Auslöschung des Übersprechens erschweren:
a) der große Sende-/Empfangsfrequenzbereich, der insbesondere durch Mobilfunkgeräte abgedeckt werden muss, die gemäß mehreren Standards (DECT, UMTS, GSM) arbeiten, und
b) die Frequenzabhängigkeit (Frequenzgang) des Übersprechens innerhalb der Übertragungsbandbreite selbst.

Eine weitere bekannte Technik zur Verringerung von Streufeld-Einflüssen ist die analoge Auslöschung von Übersprechen in der HF-Stufe. Gemäß dieser Technik wird ein Teil der Sendeleistung des Sendezweigs als Auslöschsignal abgezweigt und mit einer Phasenverschiebung von 180° bezüglich des Sendesignals und mit der gleichen Frequenz wie das Sendesignal in den Empfangszweig gekoppelt. Dazu sind ein Abdämpfelement und ein Phasenschieber vorgesehen. Die notwendige Phasenverschiebung von 180° ist indessen für den Fall einer Frequenzabhängigkeit (Frequenzgang) des Übersprechens innerhalb der Übertragungsbandbreite selbst kaum zu erhalten, da das Abdämpfelement und der Phasenschieber allgemein eine glatte Übertragungskurve aufweisen.

WO9615596 offenbart einen Transceiver des Standes der Technik mit einer Übersprechauslöschung durch ein aus dem abgetasteten Sendesignal gewonnenen kompensations signal.)

Die vorliegende Erfindung hat es sich daher zur Aufgabe gemacht, eine Technik zur Auslöschung von Übersprechen in Frequenzmultiplex-Transceivern bereitzustellen, die auch für den Fall einer Frequenzabhängigkeit (Frequenzgang) des Übersprechens innerhalb der Übertragungsbandbreite selbst und/oder bei Mobilfunkgeräten, die mehrere Standards abdecken, zufriedenstellende Ergebnisse liefert.

Die Aufgabe wird gemäß der vorliegenden Erfindung durch die Merkmale der unabhängigen Ansprüche gelöst. Die abhängigen Ansprüche bilden den zentralen Gedanken der Erfindung in besonders vorteilhafter Weise weiter.

Erfindungsgemäß ist also ein Frequenzmultiplex-Transceiver vorgesehen, der einen Basisbandblock, einen Sendezweig mit einem lokalen Oszillator sowie einen ersten Empfangszweig aufweist. Der Sendezweig und der erste Empfangszweig senden bzw. empfangen gleichzeitig auf voneinander verschiedenen Frequenzen (Vollduplextechnik). Weiterhin ist ein sogenannter Hilfs-Sendezweig mit einem in Abhängigkeit von dem lokalen Oszillator gesteuerten Mischer vorgesehen, wobei der Hilfs-Sendezweig mit dem ersten Empfangszweig verbunden ist und zu dem Empfangssignal ein Signal addiert, dessen Phase zu der Phase des Übersprech-Anteiles im Empfangszweig am Summationsrespektive Überlagerungspunkt um 180° versetzt ist, wobei das Signal die gleiche Frequenz bzw. den gleichen Frequenzbereich wie das Sendesignal aufweist. Es handelt sich also um eine sogenannte aktive Auslöschung von Übersprechen. Gemäß der vorliegenden Erfindung ist der Hilfs-Sendezweig unabhängig vom Sendezweig vom Basisbandblock ansteuerbar.

Der Basisbandblock kann ein Übersprechen des Sendezweigs erfassen und dann den Hilfs-Sendezweig abhängig von der Erfassung des Übersprechens ansteuern.

Der Basisbandblock kann insbesondere die Amplitude und die Phase des Übersprechens des Sendezweigs als Funktion der Sendefrequenz erfassen.

Zur Erfassung des Übersprechens des Sendezweigs kann vorgesehen sein, dass das Empfangssignal und das Übersprechen ungefiltert dem Basisbandblock zugeführt werden.

Zur Erfassung des Übersprechens des ersten Sendezweigs kann ein zweiter Empfangszweig vorgesehen sein, der unabhängig von dem ersten Empfangszweig ist und einen als Zwischenfrequenz-Konverter ausgebildeten Mischer aufweist, der das Übersprechen auf Grundlage der gerade verwendeten Sendefrequenz heruntermischt.

Der Basisblock kann den Hilfs-Sendezweig auf eine Minimierung des erfassten Übersprechens des Sendezweigs hin ansteuern.

Der Basisbandblock kann im Frequenzbereich den Hilfs-Sendezweig mit einer Transferfunktion des Übersprechens multipliziert mit dem invertierten Sendesignal ansteuern.

Im Zeitbereich kann der Basisbandblock zur Ansteuerung des Hilfs-Sendezweigs eine Faltungsberechnung des Übersprechens mit dem Sendesignal ausführen.

Gemäß der vorliegenden Erfindung ist weiterhin ein Verfahren zur Auslöschung des Übersprechens in einem Frequenzmultiplex-Transceiver vorgesehen. Der Frequenzmultiplex-Transceiver weist einen Basisbandblock, einen Sendezweig und einen ersten Empfangszweig auf, die gleichzeitig auf voneinander verschiedenen Frequenzen senden bzw. empfangen. Weiterhin ist ein Hilfs-Sendezweig vorgesehen, der mit dem ersten Empfangszweig verbunden ist und der zu dem Empfangssignal ein Signal addiert, dessen Phase zu der Phase des Übersprech-Anteiles am Summations- respektive Überlagerungspunkt um 180° versetzt ist, wobei das Signal die gleiche Frequenz bzw. den gleichen Frequenzbereich wie das Sendesignal aufweist, so dass eine aktive Auslöschung des Übersprechens erfolgt. Der Basisbandblock steuert den Hilfs-Sendezweig dabei unabhängig vom Sendezweig auf eine Minimierung des Übersprechens hin an.

Der Basisbandblock kann ein Übersprechen des Sendezweigs erfassen und dann den Hilfs-Sendezweig abhängig von der Erfassung des Übersprechens ansteuern.

Der Basisbandblock kann die Amplitude und Phase des Übersprechens des Sendezweigs als Funktion der Sendefrequenz erfassen.

Zur Erfassung des Übersprechens des Sendezweigs kann das Empfangssignal und das überlagerte Übersprechen ungefiltert dem Basisbandblock zugeführt werden.

Zur Erfassung des Übersprechens des Sendezweigs kann ein zweiter Empfangszweig verwendet werden, in dem das Übersprechen auf Grundlage der gerade verwendeten Sendefrequenz des Sendezweigs heruntergemischt wird.

Der Basisbandblock kann im Frequenzbereich den Hilfs-Sendezweig mit einer Transferfunktion des Übersprechens multipliziert mit dem invertierten Sendesignal ansteuern.

Der Basisbandblock kann zur Ansteuerung des Hilfs-Sendezweigs im Zeitbereich eine Faltungsberechnung des Übersprechens mit dem Sendesignal ausführen.

Im folgenden wird nun ein bevorzugtes Ausführungsbeispiel der Erfindung näher erläutert, so dass weitere Merkmale, Eigenschaften und Vorteile der vorliegenden Erfindung deutlich werden.

Dabei wird auf die anliegende Figur Bezug genommen, die schematisch ein Blockschaltbild eines Ausführungsbeispiels eines erfindungsgemäßen Frequenzmultiplex-Transceivers zeigt.

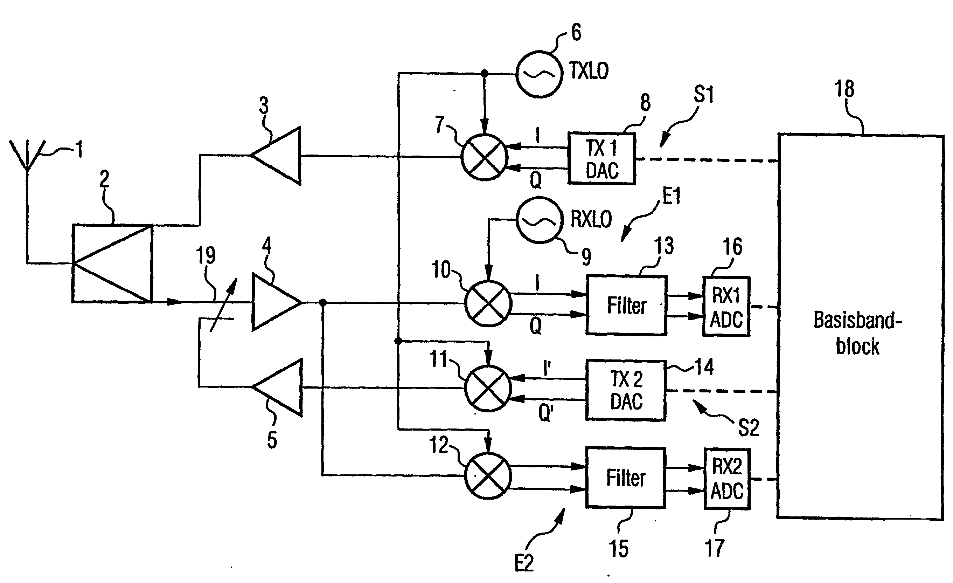

In der Figur ist ersichtlich, dass zwischen einem Leistungsverstärker 3 bzw. einem Empfangsverstärker mit geringem Rauschen 4 und einem Basisbandblock 18 insgesamt vier Sende- bzw. Empfangszweige vorgesehen sind, nämlich:
- Der eigentliche Sendezweig S1, der zum Aussenden von Signalen dient,
- der eigentliche erste Empfangszweig E1, der zum Empfang von Signalen dient,
- ein sogenannter Hilfs-Sendezweig S2, der keine eigentliche Sendefunktion hat, sondern vielmehr nur zur aktiven Auslöschung des Übersprechens des ersten Sendezweigs S1 dient, und
- ein zweiter Empfangszweig E2, der im Gegensatz zu dem ersten Empfangszweig E1 keine eigentliche Empfangsfunktion hat, sondern lediglich zur Erfassung des Übersprechens dient, das durch den Sendezweig S1 im Vollduplexbetrieb erzeugt wird.

Im folgenden sollen nun die einzelnen Zweige des in der Figur dargestellten erfindungsgemäßen Frequenzmultiplex-Transceivers, der im Vollduplexverfahren betrieben wird, näher erläutert werden.

Zuerst soll dabei der Sendezweig S1 erläutert werden. Zu sendende Daten werden von dem Basisbandblock 18 beispielsweise auf einer ersten Zwischenfrequenz TX1 zu einem Digital/Analog-Konverter 8 gegeben. Dieser Digital/Analog-Konverter 8 gibt dann die I- und die Q-Komponente der Daten zu einem Mischer 7, der mit einem Lokaloszillator 6 mit der Frequenz TXLO verbunden ist und somit die auszusendenden Daten auf den Sendefrequenzbereich umsetzt. Das Ausgangssignal des Mischers 7 wird zu einem Leistungsverstärker 3 gegeben, der mittels eines Duplexers 2 mit einer Antenne 1 verbunden ist. Für den Fall, dass für den Sende- bzw. Empfangsbetrieb zwei verschiedene Antennen verwendet werden, ist natürlich kein Duplexer 2 notwendig.

Nunmehr soll der erste Empfangszweig E1 erläutert werden. Im Vollduplexbetrieb werden gleichzeitig zu dem Sendebetrieb in dem ersten Sendezweig S1 Signale durch die Antenne 1 empfangen, und mittels des Duplexers 2 zu einem Empfangsverstärker 4 mit geringem Rauschen (LNA, Low Noise Amplifier) gegeben. Das Ausgangssignal des Empfangsverstärkers 4 wird zu einem Mischer 10 gegeben, der mit einem Lokaloszillator 9 der Empfangsfrequenz RXLO verbunden. Somit werden die Empfangssignale auf eine Zwischenfrequenz RX1 heruntergemischt, die I- und Q-Komponente der empfangenen Signale werden erfaßt und mittels eines ersten Filters 13 zu einem AD-Konverter 16 gegeben, der die derart digitalisierten Daten dann dem Basisbandblock zuführt.

Nunmehr soll der Hilfs-Sendezweig S2 erläutert werden. Dieser Hilfs-Sendezweig S2 wird unabhängig von dem Sendezweig S1 von dem Basisbandblock 18 angesteuert, d.h. die entsprechenden Basisbandsignale werden zu einem DA-Konverter 14 gegeben, der dann die entsprechenden I'/Q'-Komponenten auf einer zweiten Zwischenfrequenz TX2 einem Mischer 11 zuführt. Der Mischer 11 setzt die zugeführten Daten, d.h. die I'/Q'-Komponenten auf die Sendefrequenz TXLO um, die genau derjenigen Frequenz bzw. demjenigen Frequenzband entspricht, die bzw. das in dem Sendezweig S1 gerade verwendet wird. Die Ansteuerung durch den Basisbandblock 18 erfolgt dabei derart, dass die Phase des Signals in dem Hilfs-Sendezweig S2 exakt um 180° zu dem Übersprech-Anteil in dem ersten Empfangszweig E1 ist.

Das Ausgangssignal des Mischers 11 des Hilfs-Sendezweigs S2 wird wiederum durch den Verstärker 5 leistungsverstärkt und dann einem Koppler 19 zugeführt, um es derart verstärkt in den ersten Empfangszweig E1 einzukoppeln. Die Ansteuerung des Hilfs-Sendezweigs S2 durch den Basisbandblock 18 erfolgt dabei derart, dass durch die Einkopplung des Ausgangssignals des Hilfs-Sendezweigs S2 durch den Koppler 19 in den ersten Empfangszweig E1 ein Übersprechen, das im Vollduplexbetrieb durch den Sendezweig S1 erzeugt wird, ausgelöscht oder zumindest deutlich vermindert wird.

Nunmehr soll der zweite Empfangszweig E2 erläutert werden, der, wie weiter unten noch näher ausgeführt werden wird, lediglich eine Option ist und nicht zwingend vorgesehen sein muß. In dem zweiten Empfangszweig E2 wird das Ausgangssignal des Empfangsverstärkers 4 des ersten Empfangszweigs E1 dem Mischer 12 zugeführt, der mit dem Sende-Lokaloszillator 6 der Frequenz TXLO verbunden ist und somit das abgekoppelte Signal des ersten Empfangszweigs E1 auf eine Zwischenfrequenz RX2 heruntermischt. Es ist anzumerken, dass das Ausgangssignal des Empfangsverstärkers 4 des ersten Empfangszweigs 1 neben dem eigentlichen empfangenen Signal natürlich überlagert das Übersprechen des ersten Sendezweigs S1 im Vollduplexbetrieb enthält. Das Ausgangssignal des Mischers 12 des zweiten Empfangszweig E2 wird über eine Filterschaltung 15 einem A/D-Konverter 17 zugeführt, der wiederum die derart digitalisierten Daten dem Basisbandblock 18 zuführt. Wie bereits gesagt ist der zweite Empfangszweig E2 lediglich optional vorgesehen und dient in diesem Fall zur Erfassung des wo möglicherweise frequenzabhängigen Übersprechens des ersten Sendezweigs S1.

Nunmehr soll der Betrieb des in der Figur dargestellten Vollduplex (Frequenzmultiplex)-Transceivers erläutert werden. Erfindungsgemäß werden zur Auslöschung von Übersprech-Anteilen die folgenden Schritte ausgeführt:

Erfindungsgemäß ist der Hilfs-Sendezweig S2 vorgesehen, der unabhängig von dem Sendezweig S1 von dem Basisbandblock 18 angesteuert werden kann. Die Ausgangsleistung dieses Hilfs-Sendezweigs S2, d.h. die entsprechende Verstärkung des Verstärkers 5 ist im Vergleich zu der Ausgangsleistung, die durch den Leistungsverstärker 3 des eigentlichen Sendezweigs S1 bereitgestellt wird, wesentlich kleiner. Der Grund dafür ist, dass das Übersprechen allgemein wenigstens 15dB unterhalb der Sendezweigleistung liegt, wenn ein Koppler verwendet wird oder wenn zwei Antennen für die Trennung des Sende- bzw. Empfangssignals verwendet werden. Daher ist der Energieverbrauch in dem Hilfs-Sendezweig S2, insbesondere der Energieverbrauch durch den Hilfs-Sendeverstärker 5 sehr gering im Vergleich zu dem Energieverbrauch zu dem eigentlichen Sendezweig S1.

Als nächster Schritt wird das Übersprechen im Basisbandblock 18 erfasst. Die Phase und die Amplitude des Übersprechens werden somit erfasst. Voraussetzung dafür ist, daß die Kanalwahl im Basisband erfolgt. Dies bedeutet, dass das Übersprechen dem eigentlichen Empfangssignal überlagert zu dem Basisbandblock 18 ohne Vorfilterung gegeben werden. Wenn, wie es in der Figur der Fall ist, das dem eigentlichen Empfangssignal überlagerte Übersprechen in dem ersten Empfangszweig E1 gefiltert (Filter 13) dem Basisbandblock 18 zugeführt werden, wird der zweite Empfangszweig E2 vorgesehen, der eine zusätzliche Zwischenfrequenzschaltung (Mischer 12) aufweist. Somit kann das Übersprechen separat erfasst werden.

Als nächster Schritt wird nach der Erfassung des Übersprechens, genauer gesagt sowohl der Phase wie auch der Amplitude des Übersprechens, in dem Basisbandblock 18 ein Algorithmus ausgeführt, um die Phase und die Amplitude des Ausgangssignals des Hilfs-Sendezweigs S2 durch eine entsprechende Ansteuerung durch den Basisbandblock 18 derart einzustellen, dass das Übersprechen aktiv kompensiert wird (Koppler 19). Die Ansteuerung des Hilfs-Sendezweigs S2 durch den Basisbandblock 18 erfolgt also derartig, dass das laufend erfasste Übersprechen unter einem vorbestimmten akzeptierbaren Grenzpegel fällt. Sobald das in dem Basisbandblock 18 laufend erfasste Übersprechen unter den genannten Grenzpegel gefallen ist, kann der Transceiver, d.h. genauer gesagt der Empfangszweig E1 betrieben werden, ohne dass er durch ein Übersprechen von dem Sendezweig S1 beeinträchtigt wird.

Für den Fall, dass das Übersprechen innerhalb der Sendebandbreite des Sendezweigs S1 eine starke Frequenzabhängigkeit aufweist, wird diese Frequenzabhängigkeit des Übersprechens im Basisbandblock 18 erfasst, ausgewertet und gegebenenfalls wird die Phase und Amplitude des Übersprechens abhängig von der Frequenz innerhalb des Sendefrequenzbereichs im Basisbandblock 18 abgespeichert. Der Hilfs-Sendezweig S2 wird für den Fall einer starken Frequenzabhängigkeit des Übersprechens innerhalb der Sendebandbreite mit der Transferfunktion des Übersprechens multipliziert mit dem invertierten Sendesignal (im Frequenzbereich) angesteuert. Für ein softwaredefiniertes Telekommunikations-Funkgerät, das im Zeitbereich betrieben wird, bedeutet dies, dass im Basisbandblock 18 dazu eine Faltungsberechnung ausgeführt wird.

Durch die vorliegende Erfindung kann also insbesondere bei Software-definierten Telekommunikations-Funkgeräten ein Übersprechen von dem Sendezweig aktiv gelöscht, d.h. unter einen bestimmten Grenzpegel gebracht werden, so dass der Empfangszweig durch das Übersprechen nicht mehr beeinträchtigt wird. Die Erfindung hat dabei gegenüber dem Stand der Technik den weiteren Vorteil, dass ein Seitenbandrauschen des Sendeoszillators unterdrückt wird.

### Bezugszeichenliste

- 1: Antenne
- 2: Duplexer
- 3: Sende-Leistungsverstärker
- 4: Empfangsverstärker
- 5: Hilfs-Sendeverstärker
- 6: Lokaloszillator (Sendezweig S1)
- 7: Mischer
- 8: D/A-Konverter
- 9: Empfangs-Lokaloszillator
- 10: Mischer
- 11: Mischer
- 12: Mischer
- 13: Filter
- 14: D/A-Konverter
- 15: Filter
- 16: A/D-Konverter
- 17: A/D-Konverter
- 18: Basisbandblock
- 19: Koppler
- S1:: Sendezweig
- S2:: Hilfs-Sendezweig
- E1:: erster Empfangszweig
- E2:: zweiter Empfangszweig

## Patentansprüche

1. Frequenzmultiplex-Transceiver mit folgenden Merkmalen: Ein Basisbandblock (18), ein Sendezweig (S1) mit einem lokalen Oszillator (6) und ein erster Empfangszweig (E1) sind derart miteinander verbunden, dass auf voneinander verschiedenen Frequenzen gleichzeitig gesendet und empfangen wird, ein Hilfs-Sendezweig (S2) mit einem von dem lokalen Oszillator (6) gespeisten Mischer (11) ist mit dem ersten Empfangszweig (E1) verbunden und addiert zu dem Empfangssignal (E1) ein Signal, dessen Phase zu der Phase des Übersprech-Anteiles im ersten Empfangszweig (E1) am Summations- respektive Überlagerungspunkt um 180° versetzt ist und das die gleiche Frequenz bzw. den gleichen Frequenzbereich wie das Sendesignal aufweist,
der Hilfs-Sendezweig (S2) ist unabhängig vom ersten Sendezweig (S1) vom Basisbandblock (18) derart ansteuerbar, dass am Ausgang des Mischers (11) das Kompensationssignal anliegt.

2. Frequenzmultiplex-Transceiver nach Anspruch 1,
**dadurch gekennzeichnet,**
**dass** der Basisbandblock (18) ein Übersprechen des Sendezweigs (S1) erfasst und den Hilfs-Sendezweig (S2) abhängig von der Erfassung des Übersprechens ansteuert.

3. Frequenzmultiplex-Transceiver nach Anspruch 2,
**dadurch gekennzeichnet,**
**dass** der Basisbandblock (18) die Amplitude und Phase des Übersprechens des Sendezweigs (S1) als Funktion der Sendefrequenz erfasst.

4. Frequenzmultiplex-Transceiver nach Anspruch 2 oder 3,
**dadurch gekennzeichnet,**
**dass** zur Erfassung des Übersprechens des Sendezweigs (S1) das Empfangssignal und das Übersprechen ungefiltert dem Basisbandblock (18) zuführbar ist.

5. Frequenzmultiplex-Transceiver nach Anspruch 2 oder 3,
**dadurch gekennzeichnet,**
**dass** zur Erfassung des Übersprechens des Sendezweigs (S1) ein zweiter Empfangszweig (E2) vorgesehen ist, der einen weiteren Mischer (12) aufweist, der das Übersprechen auf Grundlage der gerade verwendeten Sendefrequenz heruntermischt.

6. Frequenzmultiplex-Transceiver nach einem der vorhergehenden Ansprüche,
**dadurch gekennzeichnet,**
**dass** der Basisbandblock (18) den Hilfs-Sendezweig (S2) auf eine Minimierung des erfassten Übersprechens des Sendezweigs (S1) hin ansteuert.

7. Frequenzmultiplex-Transceiver nach einem der vorhergehenden Ansprüche,
**dadurch gekennzeichnet,**
**dass** der Basisbandblock (18) im Frequenzbereich den Hilfs-Sendezweig (S2) mit einer Transferfunktion des Übersprechens multipliziert mit dem invertierten Sendesignal ansteuert.

8. Frequenzmultiplex-Transceiver nach einem der vorhergehenden Ansprüche,
**dadurch gekennzeichnet,**
**dass** der Basisbandblock (18) zur Ansteuerung des Hilfs-Sendezweigs (S2) im Zeitbereich eine Faltungsberechnung des Übersprechens mit dem Sendesignal ausführt.

9. Verfahren zur Auslöschung von Ubersprechen in einem Frequenzmultiplex-Transceiver mit folgenden Merkmalen:
Ein Basisbandblock (18), ein Sendezweig (S1) und ein erster Empfangszweig (E1) senden und empfangen gleichzeitig auf voneinander verschiedenen Frequenzen,
ein Hilfs-Sendezweig (S2), der mit dem ersten Empfangszweig (E1) verbunden ist, addiert zu dem Empfangssignal (E1) ein Signal, dessen Phase zu der Phase des Übersprech-Anteiles im ersten Empfangszweig (E1) am Summations- respektive Überlagerungspunkt um 180° versetzt ist, wobei das Signal die gleiche Frequenz bzw. den gleichen Frequenzbereich wie das Sendesignal aufweist,
der Basisbandblock (18) steuert den Hilfs-Sendezweig (S2) unabhängig vom Sendezweig (S1) auf eine Minimierung des Übersprechens hin an.

10. Verfahren nach Anspruch 9,
**dadurch gekennzeichnet,**
**dass** der Basisbandblock (18) ein Übersprechen des Sendezweigs (S1) erfasst und den Hilfs-Sendezweig (S2) abhängig von der Erfassung des Übersprechens ansteuert.

11. Verfahren nach Anspruch 10,
**dadurch gekennzeichnet,**
**dass** der Basisbandblock (18) die Amplitude und Phase des Übersprechens des Sendezweigs (S1) als Funktion der Sendefrequenz erfasst.

12. Verfahren nach Anspruch 10 oder 11,
**dadurch gekennzeichnet,**
**dass** zur Erfassung des Übersprechens des Sendezweigs (S1) das Empfangssignal und das Übersprechen ungefiltert dem Basisbandblock (18) zugeführt wird.

13. Verfahren nach Anspruch 10 oder 11,
**dadurch gekennzeichnet,**
**dass** zur Erfassung des Übersprechens des Sendezweigs (S1) ein zweiter Empfangszweig (E2) verwendet wird, in dem das Übersprechen auf Grundlage der gerade verwendeten Sendefrequenz heruntergemischt (12) wird.

14. Verfahren nach einem der Ansprüche 9 bis 13,
**dadurch gekennzeichnet,**
**dass** der Basisbandblock (18) im Frequenzbereich den Hilfs-Sendezweig (S2) mit einer Transferfunktion des Übersprechens multipliziert mit dem invertierten Sendesignal ansteuert.

15. Verfahren nach einem der Ansprüche 9 bis 14,
**dadurch gekennzeichnet,**
**dass** der Basisbandblock (18) zur Ansteuerung des Hilfs-Sendezweigs (S2) im Zeitbereich eine Faltungsberechnung des Übersprechens mit dem Sendesignal ausführt.

## Claims

1. A frequency division multiplex transceiver having the following features: a baseband block (18), a transmit path (S1) with a local oscillator (6) and a first receive path (E1) are connected to one another in such a way that they respectively transmit and receive simultaneously on different frequencies, an auxiliary transmit path (S2) having a mixer (11) supplied by the local oscillator (6) is connected to the first receive path (E1) and adds to the received signal (E1) a signal whose phase is shifted by 180° with respect to the phase of the crosstalk portion in the first receive path (E1) at the summation or superposition point and which has the same frequency or the same frequency range as the transmit signal,
the auxiliary transmit path (S2) can be driven by the baseband block (18) independently of the first transmit path (S1) in such a way that the compensation signal is present at the output of the mixer (11).

2. The frequency division multiplex transceiver as claimed in claim 1, **characterized in that** the baseband block (18) senses crosstalk of the transmit path (S1) and drives the auxiliary transmit path (S2) as a function of the sensing of the crosstalk.

3. The frequency division multiplex transceiver as claimed in claim 2, **characterized in that** the baseband block (18) senses the amplitude and phase of the crosstalk of the transmit path (S1) as a function of the transmit frequency.

4. The frequency division multiplex transceiver as claimed in claim 2 or 3, **characterized in that**, in order to sense the crosstalk of the transmit path (S1), the receive signal and the crosstalk can be fed unfiltered to the baseband block (18).

5. The frequency division multiplex transceiver as claimed in claim 2 or 3, **characterized in that**, in order to sense the crosstalk of the transmit path (S1) a second receive path (E2) is provided which has a further mixer (12) which downmixes the crosstalk on the basis of the transmit frequency currently used.

6. The frequency division multiplex transceiver as claimed in one of the preceding claims, **characterized in that** the baseband block (18) drives the auxiliary transmit path (S2) to minimize the sensed crosstalk of the transmit path (S1).

7. The frequency division multiplex transceiver as claimed in one of the preceding claims, **characterized in that** the baseband block (18) drives the auxiliary transmit path (S2) in the frequency domain using a transfer function of the crosstalk multiplied by the inverted transmit signal.

8. The frequency division multiplex transceiver as claimed in one of the preceding claims, **characterized in that**, in order to drive the auxiliary transmit path (S2), the baseband block (18) carries out a folding calculation of the crosstalk with the transmit signal in the time domain.

9. A method for eliminating crosstalk in a frequency division multiplex transceiver having the following features:
a baseband block (18), a transmit path (S1) and a first receive path (E1) transmit and receive simultaneously on different frequencies,
an auxiliary transmit path (S2) which is connected to the first receive path (E1), adds to the received signal (E1) a signal whose phase is shifted by 180° with respect to the phase of the crosstalk portion in the first receive path (E1) at the summation or superposition point, the signal having the same frequency or the same frequency range as the transmit signal,
the baseband block (18) drives the auxiliary transmit path (S2) to minimize the crosstalk, independently of the transmit path (S1).

10. The method as claimed in claim 9, **characterized in that** the baseband block (18) senses crosstalk of the transmit path (S1) and drives the auxiliary transmit path (S2) as a function of the sensing of the crosstalk.

11. The method as claimed in claim 10, **characterized in that** the baseband block (18) senses the amplitude and phase of the crosstalk of the transmit path (S1) as a function of the transmit frequency.

12. The method as claimed in claim 10 or 11, **characterized in that**, in order to sense the crosstalk of the transmit path (S1), the receive signal and the crosstalk are fed unfiltered to the baseband block (18).

13. The method as claimed in claim 10 or 11, **characterized in that**, in order to sense the crosstalk of the transmit path (S1), a second receive path (S2) is used in which the crosstalk is downmixed (12) on the basis of the transmit frequency currently used.

14. The method as claimed in one of claims 9 to 13, **characterized in that** the baseband block (18) drives the auxiliary transmit path (S2) in the frequency domain using a transfer function of the crosstalk multiplied by the inverted transmit signal.

15. The method as claimed in one of claims 9 to 14, **characterized in that**, in order to drive the auxiliary transmit path (S2), the baseband block (18) carries out a folding calculation of the crosstalk with the transmit signal in the time domain.

## Revendications

1. Emetteur à multiplexage en fréquence ayant les caractéristiques suivantes :
un bloc de bande de base (18), une branche d'émission (S1) avec un oscillateur local (6) et une première branche de réception (E1) sont reliés entre eux de manière à émettre et recevoir simultanément sur des fréquences différentes l'une de l'autre,
une branche d'émission auxiliaire (S2) avec un mélangeur (11) alimenté par l'oscillateur local (6) est reliée à la première branche de réception (E1) et additionne au signal de réception (E1) un signal dont la phase est décalée de 180° par rapport à la phase de la composante de diaphonie dans la première branche de réception (E1) au point de superposition respective de sommation et qui a la même fréquence ou le même domaine de fréquence que le signal d'émission,
la branche d'émission auxiliaire (S2) est commandable par le bloc de bande de base (18) indépendamment de la première branche d'émission (S1) de telle sorte que le signal de compensation se trouve à la sortie du mélangeur (11).

2. Emetteur à multiplexage en fréquence selon la revendication 1,
**caractérisé par le fait que** le bloc de bande de base (18) détecte une diaphonie de la branche d'émission (S1) et commande la branche d'émission auxiliaire (S2) en fonction de la détection de la diaphonie.

3. Emetteur à multiplexage en fréquence selon la revendication 2,
**caractérisé par le fait que** le bloc de bande de base (18) détecte l'amplitude et la phase de la diaphonie de la branche d'émission (S1) en fonction de la fréquence d'émission.

4. Emetteur à multiplexage en fréquence selon la revendication 2 ou 3,
**caractérisé par le fait que**, pour la détection de la diaphonie de la branche d'émission (S1), le signal de réception et la diaphonie sont envoyés non filtrés au bloc de bande de base (18).

5. Emetteur à multiplexage en fréquence selon la revendication 2 ou 3,
**caractérisé par le fait que**, pour la détection de la diaphonie de la branche d'émission (S1), il est prévu une deuxième branche de réception (E2) qui comporte un autre mélangeur (12) qui abaisse la diaphonie sur la base de la fréquence d'émission justement utilisée.

6. Emetteur à multiplexage en fréquence selon l'une des revendications précédentes,
**caractérisé par le fait que** le bloc de bande de base (18) commande la branche d'émission auxiliaire (S2) en vue d'une minimisation de la diaphonie détectée de la branche d'émission (S1).

7. Emetteur à multiplexage en fréquence selon l'une des revendications précédentes,
**caractérisé par le fait que** le bloc de bande de base (18) commande dans le domaine fréquentiel la branche d'émission auxiliaire (S2) avec une fonction de transfert de la diaphonie multipliée par le signal d'émission inversé.

8. Emetteur à multiplexage en fréquence selon l'une des revendications précédentes,
**caractérisé par le fait que** le bloc de bande de base (18) réalise pour la commande de la branche d'émission auxiliaire (S2) dans le domaine temporel un calcul de convolution de la diaphonie avec le signal d'émission.

9. Procédé pour la suppression de la diaphonie dans un émetteur-récepteur à multiplexage en fréquence ayant les caractéristiques suivantes :
un bloc de bande de base (18), une branche d'émission (S1) et une première branche de réception (E1) émettent et reçoivent simultanément sur des fréquences différentes l'une de l'autre,
une branche d'émission auxiliaire (S2) qui est reliée à la première branche de réception (E1) additionne au signal de réception (E1) un signal dont la phase est décalée de 180° par rapport à la phase de la composante de diaphonie dans la première branche de réception (E1) au point de superposition respective de sommation, le signal ayant la même fréquence ou le même domaine de fréquence que le signal d'émission,
le bloc de bande de base (18) commande la branche d'émission auxiliaire (S2) indépendamment de la première branche d'émission (S1) en vue d'une minimisation de la diaphonie.

10. Procédé selon la revendication 9,
**caractérisé par le fait que** le bloc de bande de base (18) détecte une diaphonie de la branche d'émission (S1) et commande la branche d'émission auxiliaire (S2) en fonction de la détection de la diaphonie.

11. Procédé selon la revendication 10,
**caractérisé par le fait que** le bloc de bande de base (18) détecte l'amplitude et la phase de la diaphonie de la branche d'émission (S1) en fonction de la fréquence d'émission.

12. Procédé selon la revendication 10 ou 11,
**caractérisé par le fait que**, pour la détection de la diaphonie de la branche d'émission (S1), le signal de réception et la diaphonie sont envoyés non filtrés au bloc de bande de base (18).

13. Procédé selon la revendication 10 ou 11,
**caractérisé par le fait que**, pour la détection de la diaphonie de la branche d'émission (S1), il est prévu une deuxième branche de réception (E2) dans laquelle la diaphonie est abaissée (12) sur la base de la fréquence d'émission justement utilisée.

14. Procédé selon l'une des revendications 9 à 13,
**caractérisé par le fait que** le bloc de bande de base (18) commande dans le domaine fréquentiel la branche d'émission auxiliaire (S2) avec une fonction de transfert de la diaphonie multipliée par le signal d'émission inversé.

15. Procédé selon l'une des revendications 9 à 14,
**caractérisé par le fait que** le bloc de bande de base (18) réalise pour la commande de la branche d'émission auxiliaire (S2) dans le domaine temporel un calcul de convolution de la diaphonie avec le signal d'émission.
